# FASCICULE DE BREVET EUROPEEN

(11) **EP 2 170 638 B1**
(45) Date de publication et mention de la délivrance du brevet: **07.09.2011**
(21) Numéro de dépôt: 08827073.1
(22) Date de dépôt: 30.07.2008
(51) Int. Cl.: B60H 1/00

(54) **ASSOCIATION D'UN CONDUIT DE CHAUFFAGE ET/OU CLIMATISATION AVEC UN ELEMENT D'INSONORISATION DE VEHICULE AUTOMOBILE**
VERBINDUNG EINER LEITUNG EINER HEIZUNGS- UND/ODER KLIMAANLAGE MIT EINEM SCHALLDÄMMELEMENT FÜR EIN KRAFTFAHRZEUG
ASSOCIATION BETWEEN A HEATING AND/OR AIR-CONDITIONING DUCT AND A SOUND-PROOFING MEMBER FOR AN AUTOMOBILE

(30) Priorité: 03.08.2007 FR 0756938
(43) Date de publication de la demande: 07.04.2010
(73) Titulaire: Renault s.a.s., 92100 Boulogne-Billancourt (FR)
(72) Inventeur: DUBIEF, Flavien, F-78180 Montigny Le Bretonneux (FR); PREVIDI, Stéphane, F-91360 Villemoisson-sur-orge (FR)
(86) Numéro de dépôt international: PCT/FR2008/051435
(87) Numéro de publication internationale: WO 2009/019406

(56) Documents cités:
- EP-A- 1 504 933
- WO-A-99/48712
- DE-U1-202004 006 337
- FR-A- 2 759 027
- FR-A- 2 787 391
- GB-A- 2 376 215

## Description

### Domaine de l'invention

L'invention concerne les véhicules automobiles et, en particulier, l'implantation du conduit de chauffage ou de climatisation inférieur destiné au confort des passagers avant d'un véhicule, notamment concernant l'arrivée d'un tel conduit au niveau de la pièce appelée "absorbant bas de planche", qui est la pièce qui ferme le volume de la planche de bord par rapport au volume moteur.

### Art antérieur et problème posé

Dans un véhicule automobile, les conduits de distribution d'air de chauffage ou de climatisation, devant déboucher sur les pieds des passagers avant doivent cohabiter avec des éléments, dont un élément insonorisant placé sous la planche de bord, qui est destiné à atténuer le niveau sonore généré par le moteur dans le volume moteur, vis-à-vis de l'habitacle.

Dans un habitacle de véhicule automobile, les conduits de chauffage destinés aux pieds des passagers avant sont fixés, d'une part, à l'appareil de chauffage/climatisation, d'une part, et à la planche de bord, d'autre part. La mousse insonorisante, qui prend place sous la planche de bord, fait l'objet d'un système de fixation, qui lui est dédié.

Plus exactement, l'élément absorbant bas de planche fermant le volume de la planche de bord est souvent garni d'une mousse absorbante acoustique, qui est, le plus souvent, collée. Elle prend place sous la planche de bord, au-dessus des pieds des passagers avant. Comme ces derniers sont très souvent au nombre de deux, on trouve deux de ces éléments absorbants, l'un côté conducteur, sous la colonne de direction, et l'autre côté passager, sous la cuve vide-poches.
La figure 1 montre un conduit de chauffage 1 de l'état de l'art, comprenant principalement une entrée 2, plusieurs trous de sortie 3, placés latéralement, et un pion de fixation 4 destiné à être vissé sur la planche de bord. L'entrée 2 est, de préférence, clipsée sur le climatiseur du véhicule.
La figure 2A montre la mousse insonorisante 5 placée sur un couvercle 6 et équipé de trous 7 correspondant aux trous 3 du conduit de chauffage 1 de la figure 1. L'ensemble est destiné à être placé sous la planche de bord 8, comme l'indiquent les quatre flèches de cette figure.
La figure 2B montre, en coupe, cet ensemble et permet de constater que les trous 7 traversent à la fois la mousse insonorisante 5 et son couvercle 6 fermant le bas de planche. La disposition de ces trous 7 correspond à celle des trous 3 du conduit de chauffage 1 de la figure 1.
La figure 3A montre, en coupe, le montage du conduit de chauffage 1 sur l'ensemble de la mousse insonorisante 5 et de son couvercle 6. Naturellement, les trous 3 du conduit de chauffage 1 doivent être positionnés exactement en correspondance avec les trous 7 de l'ensemble de la mousse insonorisante 5 et son couvercle 6.

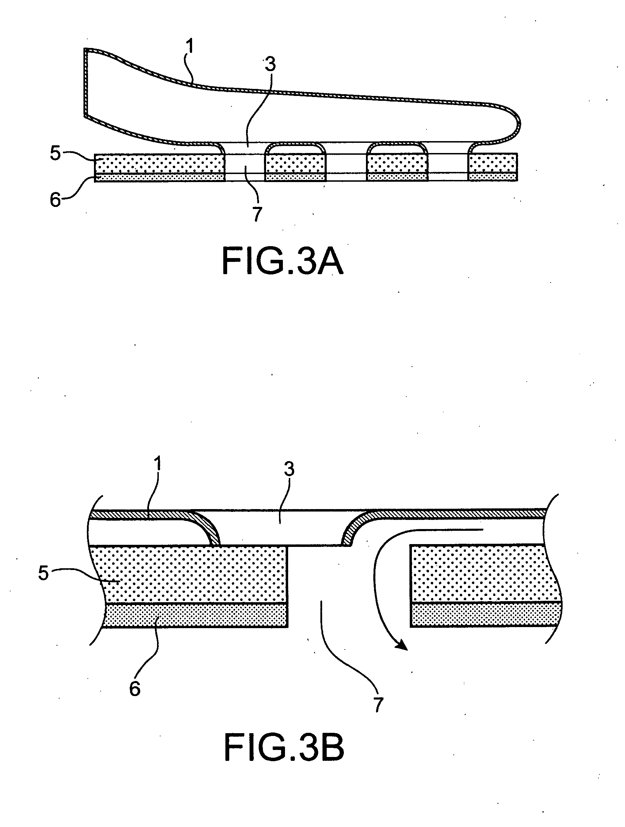

Comme le montre la figure 3B, lors du montage du véhicule, il est possible qu'il y ait recouvrement partiel des trous 3 du conduit 1 par l'ensemble de la mousse insonorisante 5 et de son couvercle 6. En d'autres termes, il est possible que ces trous 3 ne soient pas en correspondance exacte avec les trous 7 de l'ensemble mousse insonorisante 5/couvercle 6. Il en résulte alors un amoindrissement de la performance du chauffage du véhicule, ainsi que le risque d'apparition de sifflements acoustiques, dus à la fuite apparaissant entre le conduit de chauffage 1 et l'ensemble mousse insonorisante 5/couvercle 6, comme nous le montre la flèche sur cette figure 3B. Ceci n'est qu'un des inconvénients du montage sur place de ces deux éléments, d'autres inconvénients pouvant survenir.

Par exemple, il se peut que des morceaux de mousse ressortent par les trous 7 de l'ensemble mousse insonorisante 5/couvercle 6 et soient projetés dans l'habitacle du véhicule.

Dans le but de remédier à ces inconvénients, le document DE 20 2004 006 337 U1, qui est considéré comme l'art antérieur le plus proche, divulgue un ensemble comprenant un conduit de chauffage ou de climatisation apte à être monté dans l'habitacle pour déboucher sur les pieds des passagers avant d'un véhicule et un élément d'insonorisation, cet ensemble étant constitué de :
- au moins un conduit de chauffage ou de climatisation comprenant des orifices de sortie ; et
- un élément d'insonorisation constitué d'une plaque de mousse insonorisante,
le conduit de chauffage et/ou de climatisation et l'élément d'insonorisation étant combinés de façon à constituer un ensemble compact construit et monté avant sa mise en place sur le véhicule.

Le but de l'invention est d'améliorer l'ensemble précité.

Ce but est atteint par un ensemble suivant les caractéristiques de la revendication indépendante 1.

Une réalisation de l'invention prévoit de réaliser les moyens de fixation sous la forme d'agrafes ou de pions de type sapin.

Suivant l'invention, un couvercle es utilisé pour contribuer à entourer la plaque de mousse insonorisante.

Suivant l'invention, ce couvercle est fait d'une seule pièce avec le conduit de chauffage et/ou de climatisation et constituer un rabat de ce dernier pour entourer la plaque de mousse insonorisante.

La conduite de chauffage et/ou de climatisation peut être constituée simplement d'une plaque demi-conduit, bombée et appliquée contre la plaque de mousse insonorisante, qui constitue l'autre paroi d'une veine de circulation d'air, cette plaque demi-conduit étant faite d'une pièce avec le rabat.

Dans le cas où l'on n'utilise pas de rabat, le conduit peut être constitué par une plaque demi-conduit qui est bombée et appliquée contre qui constitue la deuxième paroi du conduit, des moyens de fixation étant prévus de part et d'autre de la conduite.

Dans une autre réalisation de l'invention, on prévoit d'équiper l'ensemble d'une cavité acoustique formée par une double épaisseur du conduit de chauffage et/ou de climatisation, formée d'une seule pièce avec la paroi du conduit.

Il est également envisagé de réaliser cet ensemble selon l'invention avec plusieurs conduites, mais en utilisant une seule plaque formant plusieurs demi-conduits et appliquée contre la plaque de mousse insonorisante, des moyens de fixation étant prévus entre les demi-conduits, par exemple avec des pions de fixation ou des agrafes.

Il est également prévu de pouvoir réaliser la conduite de chauffage et de climatisation avec une seule plaque constituant un demi-conduit et possédant de part et d'autre un repli en U, dans chacun desquels sont enserrés les bords de la plaque de mousse insonorisante.

Il est également prévu de réaliser l'ensemble avec deux rabats de chaque côté du conduit de chauffage et/ou de climatisation pour enserrer de part et d'autre la plaque de mousse insonorisante. Dans ce cas, les trous de sortie de la plaque de mousse insonorisante peuvent être réalisés par des encoches réalisées sur le bord des deux rabats.

Il est également prévu de réaliser l'invention avec un rabat placé en bout du conduit de chauffage et/ou de climatisation, à son extrémité fermée, cet ensemble constituant une seule pièce.

Enfin, une caractéristique intéressante prévoit de compléter l'ensemble de chaque côté d'un volume acoustique latéral avec des trous pour doter l'ensemble d'une fréquence propre adaptée, dans le but de réduire les bruits parasites.

### Liste des figures

L'invention et ses différentes caractéristiques et réalisations seront mieux comprises à la liste des figures, accompagnant cette description, et représentant respectivement :

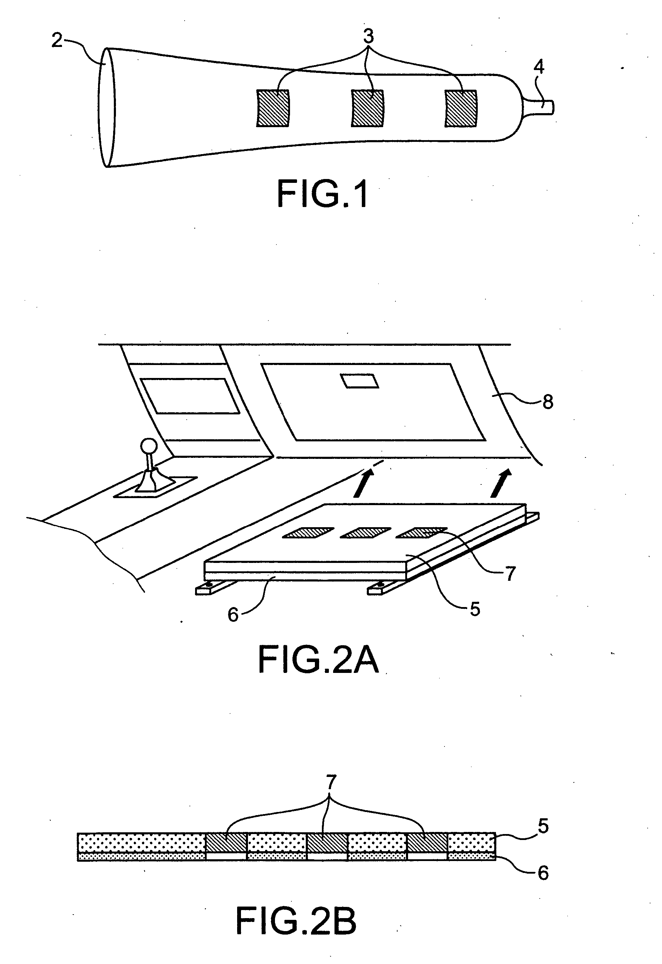

- figure 1, un conduit de chauffage et/ou de climatisation selon l'art antérieur ;
- figures 2A et 2B, les autres éléments d'utilisation du conduit de la figure 1 ;
- figures 3A et 3B, en coupe, le montage du conduit de la figure 1 sur les éléments des figures 2A et 2B ;

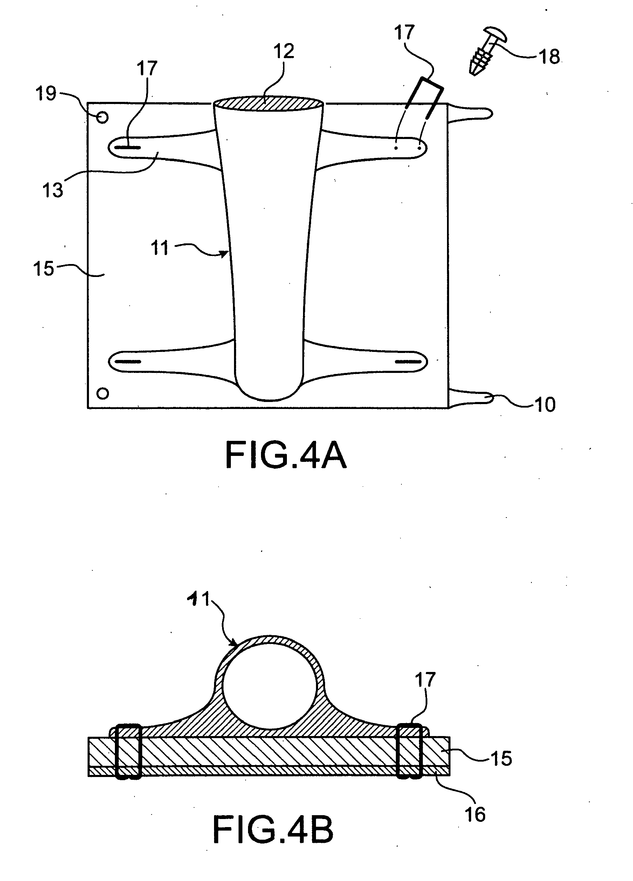

- figures 4A et 4B, une première réalisation de l'ensemble selon l'invention ;

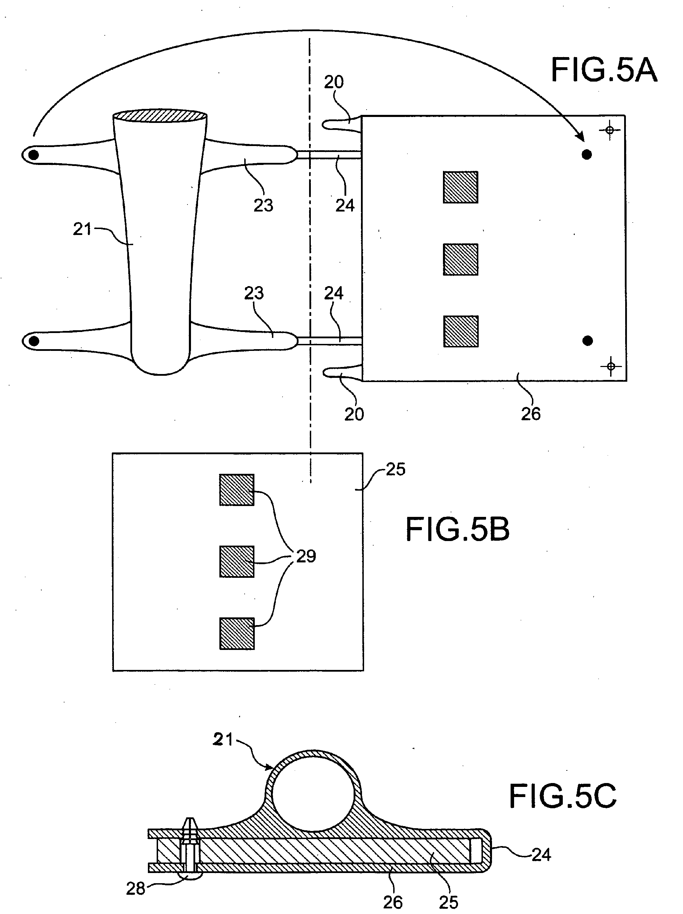

- figures 5A, 5B et 5C, une deuxième réalisation de l'ensemble selon l'invention ;

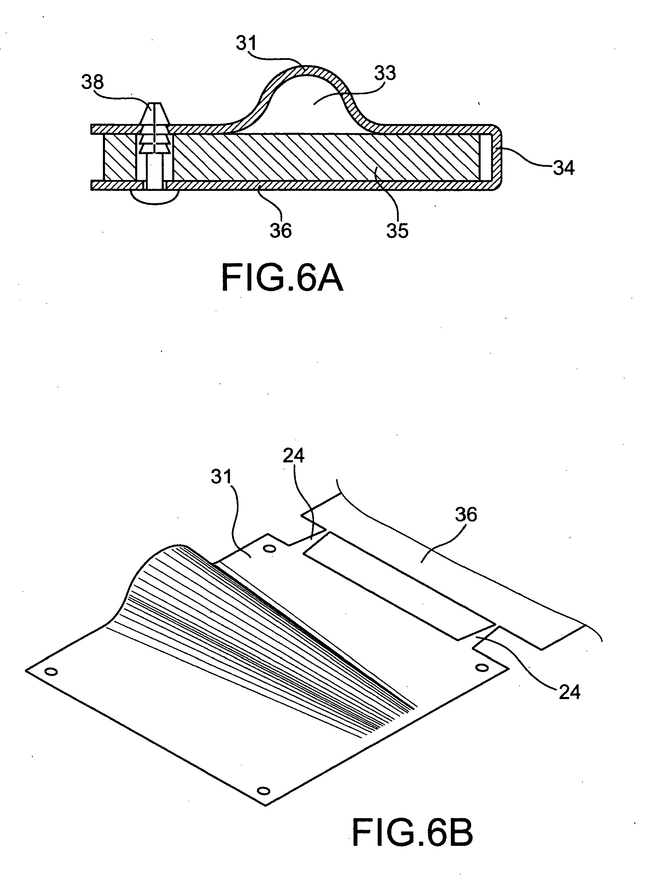

- figures 6A et 6B, une troisième réalisation de l'ensemble selon l'invention ;

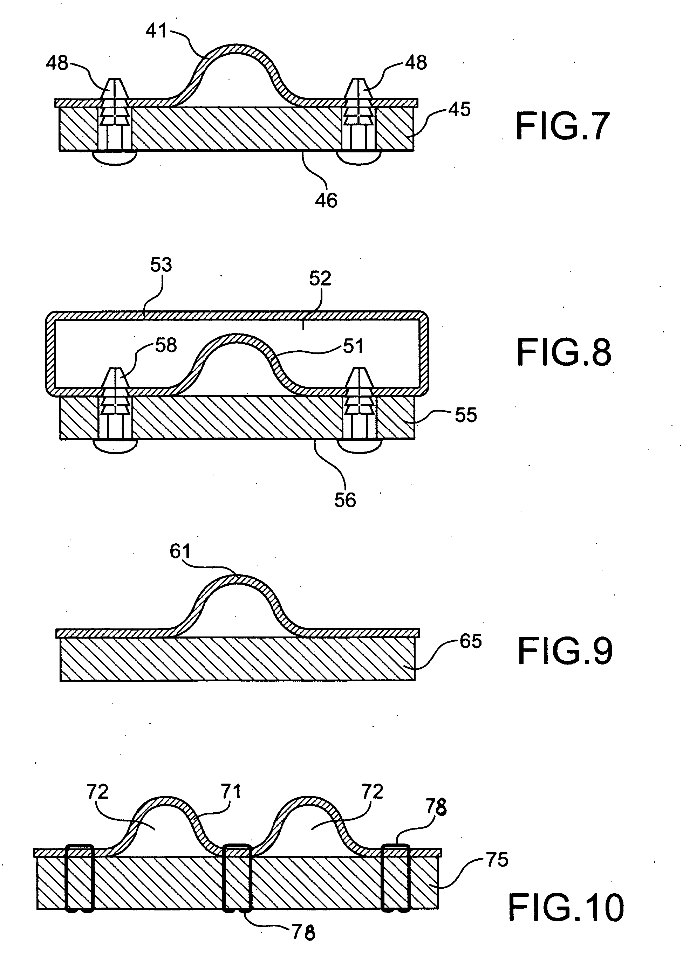

- figure 7, une quatrième réalisation de l'ensemble selon l'invention ;
- figure 8, une caractéristique optionnelle pour les différentes réalisations selon l'invention ;
- figure 9, une cinquième réalisation selon l'invention ;
- figure 10, une sixième réalisation de l'ensemble selon l'invention ;

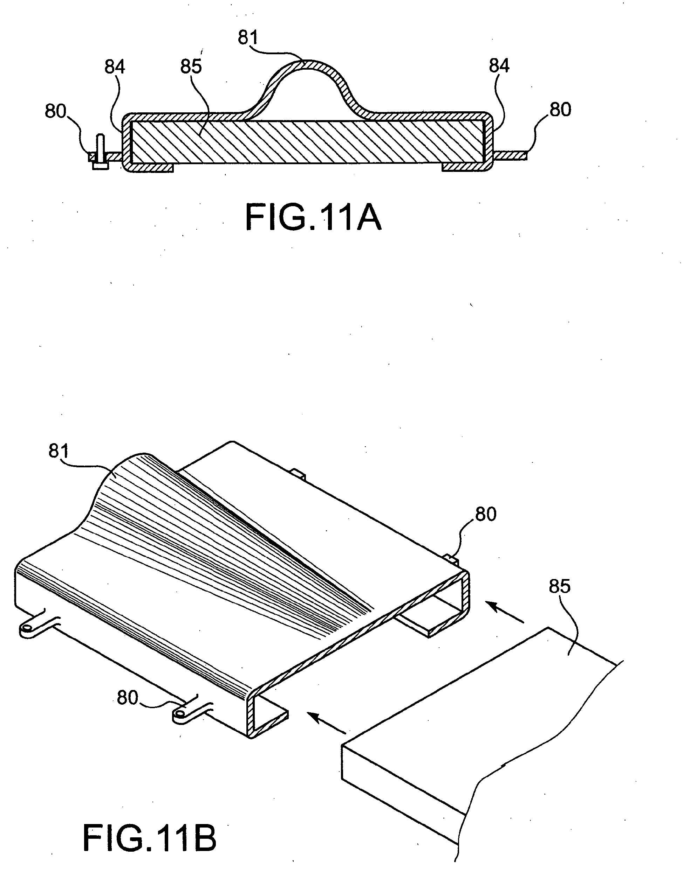

- figures 11A et 11B, une septième réalisation de l'ensemble selon l'invention ;

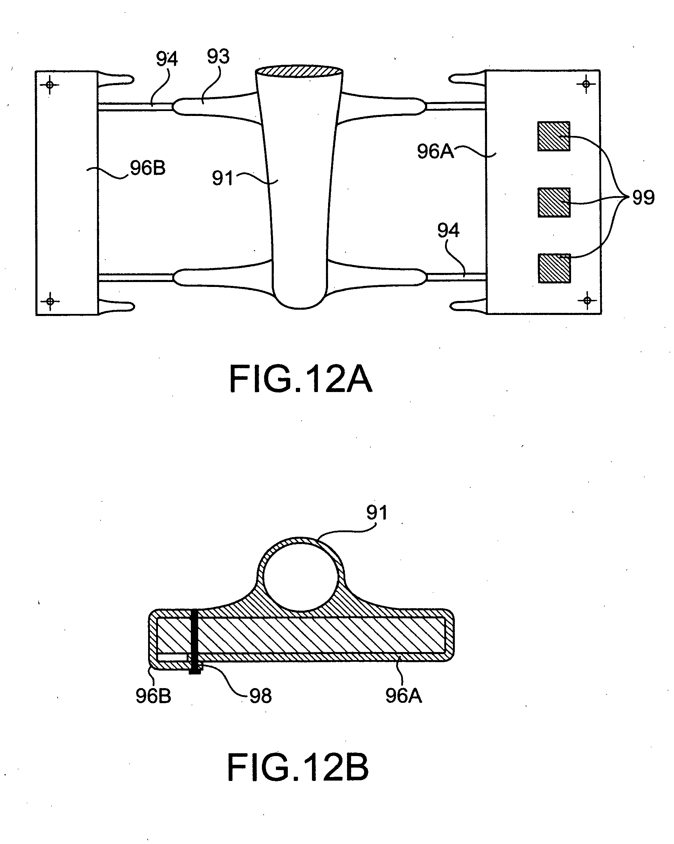

- figures 12A et 12B, une huitième réalisation de l'ensemble selon l'invention ;

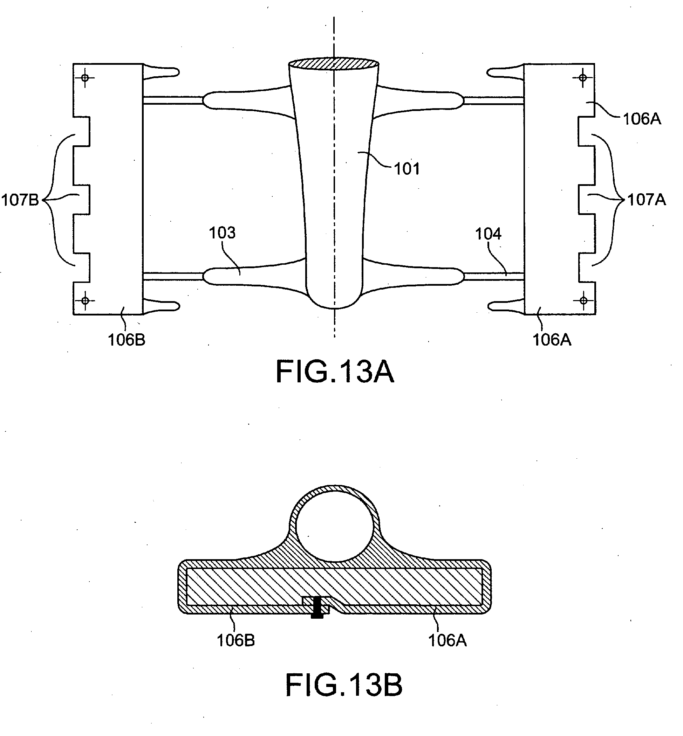

- figures 13A et 13B, une neuvième réalisation de l'ensemble selon l'invention ;

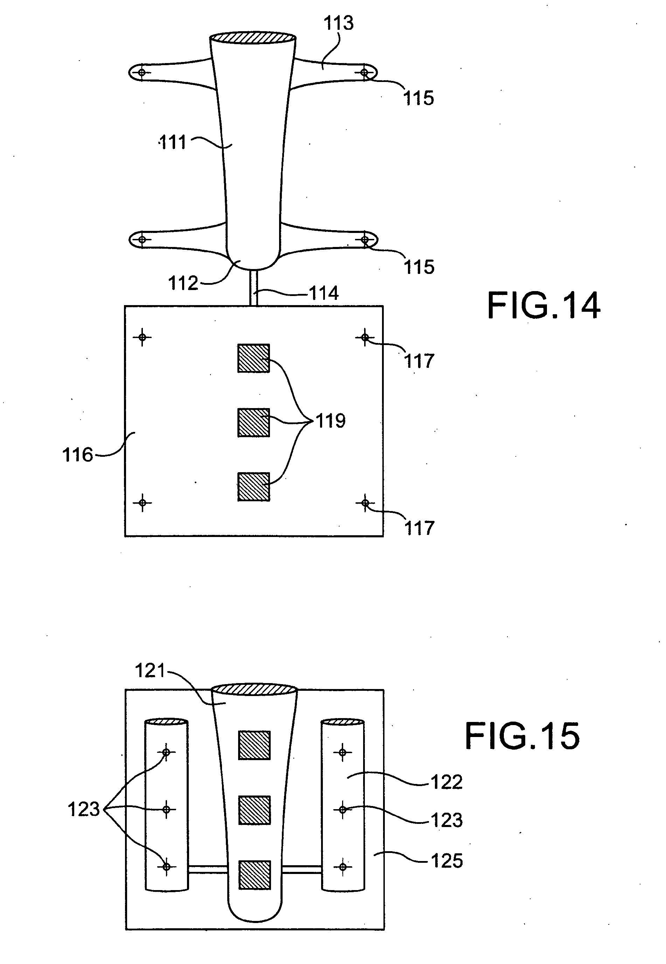

- figure 14, une dixième réalisation de l'ensemble selon l'invention ; et
- figure 15, une onzième réalisation de l'ensemble selon l'invention.

### Description détaillée de plusieurs réalisations de l'invention

En se référant à la figure 4A, une première réalisation de l'ensemble selon l'invention comprend un conduit 11 pour le chauffage et/ou la climatisation d'un véhicule automobile, obtenu, de préférence, par soufflage, pour des raisons de coût. Ce type de fabrication permet de fabriquer en même temps quatre pattes de fixation 13, deux de chaque côté du conduit. Ainsi, le conduit 11 peut être fixé sur une plaque de mousse insonorisante 15, au moyen soit d'agrafes 17, une par patte, ou de pions du type sapin 18. Bien entendu, une entrée 12 est ménagée à l'extrémité du conduit, l'autre extrémité étant fermée.

La figure 4B montre cette fixation du conduit 11 sur sa plaque de mousse insonorisante 15. On remarque la présence d'un couvercle 16 sur l'autre face de cette dernière, ce qui permet de réaliser la fixation au moyen des agrafes 17.

En revenant à la figure 4A, on constate que l'ensemble peut être positionné sur la planche de bord au moyen de deux pattes de positionnement 10 placées latéralement et un autre moyen de fixation, tel que des vis ou des pions du type sapin.

Comme le montre la figure 5A, une deuxième réalisation prévoit que le couvercle 26, qui doit enfermer, avec le conduit 21 et ses pattes 23, la plaque de mousse insonorisante 25, soit relié au conduit 21 par deux charnières 24, par exemple du type film. Ainsi, ces deux parties peuvent être fabriquées par soufflage et constituer une seule pièce.

La figure 5B montre la plaque de mousse insonorisante 25 et ses trois trous de sortie 29. Elle est destinée à être enfermée entre le conduit 21 et le couvercle 26, comme le montre 5C, qui est une coupe de l'ensemble monté. On constate que la plaque de mousse insonorisante 25 est donc enfermée, notamment grâce aux deux charnières 24 et des agrafes ou des pions du type sapin 28. L'ensemble est alors fixé sur la planche de bord, grâce à deux pattes de positionnement 20, faisant saillie par rapport au couvercle 26. Des vis ou des pions peuvent réaliser ce positionnement. Dans cette réalisation, le conduit 21 est formé uniquement de plastique.

Une troisième réalisation est représentée par les figures 6A et 6B. Dans celles-ci, la veine d'air de chauffage et/ou de climatisation est réalisée, d'une part, par un demi-conduit 31, sous la forme d'une plaque déformée 31, de manière à présenter un évidement 33 et, d'autre part, par la plaque de mousse insonorisante 35 sur laquelle elle est appliquée. La fixation peut se faire par l'intermédiaire d'une charnière, comme pour la réalisation précédente, reliant ce demi-conduit 31 au couvercle 36. L'ensemble est maintenu fixé au moyen, par exemple, de pions du type sapin 38. Un procédé de thermoformage paraît plus adapté à ce concept, notamment grâce à l'absence de corps creux nécessitant un outillage.

La figure 6B montre, en vue cavalière, cet ensemble déplié, avant montage, le demi-conduit 31 étant positionné dans le même plan que le couvercle 36, les deux étant reliés par des charnières 24.

En référence à la figure 7, une quatrième réalisation, s'apparentant à la précédente, consiste à supprimer le couvercle. Ainsi, le demi-conduit 41 est appliqué sur la plaque de mousse insonorisante 45, par exemple, par des pions du type sapin 48. En fait, le couvercle est remplacé par une couche inférieure de mousse 46 dont l'aspect peut être de finition plus ou moins soignée, par exemple du feutre noir ou un autre textile matériau. Un procédé de thermoformage paraît également plus adapté à ce concept.

Une caractéristique optionnelle est représentée à la figure 8 sur laquelle on peut voir la présence d'une cavité acoustique 52, placée au-dessus du demi-conduit 51, s'apparentant à un double vitrage. Cette cavité 52 peut être partiellement ouverte ou même divisée en plusieurs cavités, ou bien reliée à la veine d'air de chauffage/ou de climatisation par une éventuelle petite ouverture pour constituer un résonateur acoustique. Elle est réalisée au moyen du prolongement du demi-conduit 51, qui constitue en fait un volume fermé. La fixation se fait comme précédemment décrit par des moyens de fixation, tels que des agrafes ou des pions du type sapin 58 traversant la plaque de mousse insonorisante 55, une couche inférieure de mousse 56 étant également utilisée pour remplacer le couvercle.

La figure 9 montre une solution qui n'utilise qu'un demi-conduit 61, fixé sur la plaque de mousse insonorisante 65, lors d'un moulage qui s'effectue par un procédé, appelé "one shot", c'est-à-dire s'effectuant en une seule phase. Le plastique constituant le demi-conduit 61 pénètre dans la couche superficielle de la couche de mousse insonorisante 65, la fixation définitive étant effective lorsque l'ensemble est refroidi. Dans cette réalisation, comme dans les précédentes, des pattes de fixation peuvent être utilisées sur la plaque de mousse insonorisante pour procéder à la fixation de l'ensemble sur la planche de bord.

La figure 10 montre que toutes les réalisations décrites peuvent avoir, non seulement un conduit, mais plusieurs conduits. En effet, il est possible de prévoir des veines 72 formées par deux bosses de la plaque constituant les demi-conduits 71. Dans ce cas, on utilisera plusieurs moyens de fixation, notamment des agrafes 78 entre deux veines 72.

Les figures 11A et 11B montrent que la fixation d'une plaque demi-conduit 81 sur sa plaque de mousse insonorisante 85 peut être effectuée par deux rails latéraux 84 dans lesquels peut être insérée la plaque de mousse insonorisante 85. Deux pattes de fixation 80 ont été représentées des deux côtés de cet ensemble.

L'un des côtés de l'emboîtement sur la sortie du climatiseur est assuré par la mousse. L'emboîtement sur la sortie du climatiseur est assuré, sur le périmètre total, sur environ la moitié par la mousse insonorisante 85, et environ la moitié par la plaque demi-conduit 81. Le tout d'emboîte sur la sortie du climatiseur.

L'autre réalisation possible est représentée par les figures 12A et 12B. Elle consiste à partager le couvercle en deux parties 96A et 96B, rattachée chacune au conduit 91 par deux charnières 94, fixées aux pattes de fixation 93 du conduit 91. L'une de ces deux parties 96A du couvercle est plus large que l'autre partie 96B et comporte donc les trous d'évacuation 99 de l'air à distribuer dans l'habitacle du véhicule. Ceci permet d'équilibrer la forme de la pièce, lors du procédé de soufflage.

La figure 12B montre que ces deux parties 96A et 96B ont une largeur telle qu'il y a recouvrement de l'une sur l'autre, de manière à permettre la fixation de l'ensemble par des moyens, tels que des pions en sapin 98 au niveau du recouvrement.

Les figures 13A et 13B montrent une réalisation ressemblant à la précédente, excepté que les trous d'aération sont constitués par des encoches 107A et 107B pratiquées respectivement dans les deux parties 106A et 106B du couvercle pour que, une fois repliées l'une sur l'autre, comme le montre la figure 13B, les trous d'évacuation de l'air soient constitués.

En référence à la figure 14, une autre réalisation consiste à placer la charnière 114, reliant le conduit 111 au couvercle 116, à l'extrémité fermée 112 du conduit. Le repliage du couvercle 116 peut alors être effectué pour mettre en correspondance des trous de fixation 115 de pattes 113 avec des trous de fixation 117 du couvercle 116.

La figure 15 montre une option qui peut être adaptée à de nombreuses réalisations déjà décrites. Elle consiste à compléter l'ensemble constitué du conduit 121 placé sur sa plaque de mousse insonorisante 125 par des volumes latéraux additionnels 122, fixés également sur la plaque de mousse insonorisante 125 et percés de plusieurs trous 123. Ainsi, ces deux volumes latéraux additionnels 122 jouent le rôle de cavités ou résonateurs acoustiques pour l'ensemble. Ils devront être dimensionnés pour réduire les bruits parasites sous la planche de bord, tel que ceux produit par le ventilateur de climatisation et devront être accordés sur certaines fréquences précises, caractéristiques de l'ensemble placé sur la planche de bord.

### Avantages de l'invention

On conçoit que quelque soit la réalisation choisie, l'ensemble comprenant le conduit de chauffage et/ou climatisation et sa plaque de mousse insonorisante puisse être fabriqué en dehors de la chaîne de montage du véhicule et être livré pour être monté sur la planche de bord. Ceci simplifie le montage de l'ensemble du véhicule.

Ce montage s'effectue seulement par deux opérations, qui sont la fixation de l'ensemble ainsi décrite sur le climatiseur, par vissage ou clipsage et la fixation de l'ensemble sur la plage de bord.

Les jeux entre le conduit et un éventuel absorbant "bas de planche" sont mieux maîtrisés.

La mousse insonorisante utilisée ne peut pas ressortir par les trous d'évacuation.

Le montage de la mousse insonorisante sur le conduit étant déjà effectué, on ne risque pas d'esquinter celle-ci, lors du montage définitif sur le véhicule. On évite ainsi la formation de filaments dus aux frottements de la mousse contre le conduit, lors de montage selon l'art antérieur.

Bien entendu, on évite tous les inconvénients dus aux dispersions de fabrication et de montage, comme expliqué dans les paragraphes relatifs à l'art antérieur.

Concernant le prix de revient d'un tel ensemble, il est réduit, compte tenu de la réduction du nombre de pièces, notamment lorsque l'ensemble conduit/mousse insonorisante est moulé en une seule fois.

Conséquemment, on obtient une réduction du temps de fabrication.

On rappelle qu'aucune colle n'est nécessaire dans toutes ces réalisations décrites pour la fixation d'une plaque de mousse insonorisante.

Concernant le recyclage, celui-ci est facilité car, lors du démontage, la plaque de mousse peut être facilement séparée du plastique constituant le conduit. Chaque pièce peut donc être recyclée séparément.

Toujours dans le cadre du recyclage, l'utilisation de pions du type sapin en plastique est préférable.

Les résultats acoustiques sont améliorés pour les passagers se trouvant dans l'habitacle du véhicule, l'isolation du volume sous la planche de bord étant optimale. On précise aussi que cet ensemble présente une meilleure caractéristique acoustique vis-à-vis de bruits provenant des équipements sous la planche de bord, tels que des relais ou, des actionneurs électriques, ou des bruits mécaniques, par exemple de climatisation.

Enfin, on réalise, par les différentes réalisations proposées, une réduction du poids de l'ensemble, notamment avec les réalisations utilisant un demi-conduit.

## Revendications

1. Ensemble comprenant un conduit de chauffage ou de climatisation apte à être monté dans l'habitacle pour déboucher sur les pieds des passages d'un véhicule et un élément d'insonorisation, constitué par :
- au moins un conduit de chauffage et/ou de climatisation (11 à 121), comprenant des trous de sortie (29, 99) ; et
- une plaque de mousse insonorisante (16 à 116),
le conduit de chauffage et/ou de climatisation et la plaque de mousse insonorisante étant combinés de façon à constituer un seul ensemble compact construit et monté avant sa mise en place sur le véhicule, **caractérisé en ce que** le conduit de chauffage et/ou de climatisation possède des pattes de fixation (13, 93, 103, 113) et des moyens de fixation du conduit de chauffage et/ou de climatisation sur la plaque de mousse insonorisante (16 à 116),
et **en ce qu'**il comprend un couvercle (16 à 116) (26, 36, 96A, 96B, 106A, 106B et 116) pour entourer la plaque de mousse insonorisante (25 et 35), le couvercle étant fait d'une seule pièce avec le conduit de chauffage et/ou de climatisation (21, 31, 91, 101, 111 et 121) et constituant ainsi un rabat pour entourer la plaque de mousse insonorisante et **en ce qu'**il est apte à monté dans une partie inférieure de l'habitacle sur la planche de bord.

2. Ensemble selon la revendication 1, **caractérisé en ce que** les moyens de fixation font partie du groupe constitué par des agrafes (17, 77) et des pions du type sapin (18, 28, 38, 48, 58 et 98).

3. Ensemble selon la revendication 1, **caractérisé en ce que** le conduit de chauffage et/ou de climatisation est une plaque demi-conduit (31, 41, 51, 61, 81) bombée et appliquée sur la plaque de mousse insonorisante (35) avec un rabat d'une seule pièce.

4. Ensemble selon la revendication 1, **caractérisé en ce que** le conduit de chauffage et/ou de climatisation est une plaque demi-conduit (41, 51, 61, 71, 81) bombée et appliquée sur la plaque de mousse insonorisante (45, 55, 65, 75, 85), sans rabat.

5. Ensemble selon la revendication 1, **caractérisé en ce qu'**il comprend au moins une cavité acoustique (52) formée par une double épaisseur (53) de la conduite (51) formée d'une seule pièce avec cette dernière.

6. Ensemble selon la revendication 3, **caractérisé en ce que** le demi-conduit (61) est fixé sur sa plaque de mousse insonorisante (65) lors du moulage de l'ensemble par un procédé "one shot", c'est-à-dire en une seule phase.

7. Ensemble selon la revendication 1, **caractérisé en ce qu'**il comprend plusieurs veines de distribution d'air (72) formées par une seule plaque demi-conduits (71) et recevant des moyens de fixation (78) entre les veines distributrices d'air (72).

8. Ensemble selon la revendication 3, **caractérisé en ce que** la plaque demi-conduit (81) possède, sur ses côtés, une charnière (84) en forme de repli en U, dans chacune desquelles est insérée la plaque de mousse insonorisante (85).

9. Ensemble selon la revendication 1, **caractérisé en ce que** le couvercle est constitué de deux rabats (96A, 96B, 106A, 106B) fixés de chaque côté de la conduite (91, 101) par des charnières (94, 104) et possédant des trous (99) ou des encoches (107A, 107B) pour constituer les trous de sortie, des moyens de fixation étant prévus dans ces deux parties (96A, 96B, 106A, 106B) .

10. Ensemble selon la revendication 1, **caractérisé en ce que** le couvercle (116) est constitué d'un rabat relié au conduit de chauffage et/ou de climatisation (111) par une charnière (114) positionnée à une extrémité fermée (112) du conduit (111).

11. Ensemble selon la revendication 1, **caractérisé en ce qu'**il comprend deux volumes acoustiques latéraux (121, 122) possédant chacun plusieurs trous (123) pour doter l'ensemble d'une fréquence propre, adaptée à la réduction de bruits parasites.

## Claims

1. Assembly comprising a heating or air-conditioning duct capable of being mounted in the passenger compartment in order to lead onto the feet of the passengers of a vehicle and a sound-proofing element, consisting of:
- at least one heating and/or air-conditioning duct (11 to 121), comprising outlet holes (29, 99); and
- a sound-proofing foam plate (16 to 116),
the heating and/or air-conditioning duct and the sound-proofing foam plate being combined so as to form a single compact assembly constructed and mounted before it is installed on the vehicle, **characterized in that** the heating and/or air-conditioning duct has fastening lugs (13, 93, 103, 113) and means for fastening the heating and/or air-conditioning duct to the sound-proofing foam plate (16 to 116), and **in that** it comprises a cover (16 to 116) (26, 36, 96A, 96B, 106A, 106B and 116) in order to surround the sound-proofing foam plate (25 and 35), the cover being made in a single piece with the heating and/or air-conditioning duct (21, 31, 91, 101, 111 and 121) and thus forming a flap to surround the sound-proofing foam plate and **in that** it is capable of being mounted in a lower portion of the passenger compartment on the fascia panel.

2. Assembly according to Claim 1, **characterized in that** the fastening means form part of the group consisting of staples (17, 77) and snap-fitting pins (18, 28, 38, 48, 58 and 98).

3. Assembly according to Claim 1, **characterized in that** the heating and/or air-conditioning duct is a half-duct plate (31, 41, 51, 61, 81) that is domed and applied to the sound-proofing foam plate (35) with a flap in a single piece.

4. Assembly according to Claim 1, **characterized in that** the heating and/or air-conditioning duct is a half-duct plate (41, 51, 61, 71, 81) that is domed and applied to the sound-proofing foam plate (45, 55, 65, 75, 85) with no flap.

5. Assembly according to Claim 1, **characterized in that** it comprises at least one acoustic cavity (52) formed by a double thickness (53) of the duct (51) formed in a single piece with the latter.

6. Assembly according to Claim 3, **characterized in that** the half-duct (61) is attached to its sound-proofing foam plate (65) when the assembly is molded via a "one shot" method, that is to say in a single phase.

7. Assembly according to Claim 1, **characterized in that** it comprises several air-distribution passages (72) formed by a single half-duct plate (71) and receiving fastening means (78) between the air-distribution passages (72).

8. Assembly according to Claim 3, **characterized in that** the half-duct plate (81) has, on its sides, a hinge (84) in the form of a U-shaped fold, into each of which the sound-proofing foam plate (85) is inserted.

9. Assembly according to Claim 1, **characterized in that** the cover consists of two flaps (96A, 96B, 106A, 106B) fastened on each side of the duct (91, 101) by hinges (94, 104) and having holes (99) or notches (107A, 107B) in order to form the outlet holes, fastening means being provided in theses two portions (96A, 96B, 106A, 106B).

10. Assembly according to Claim 1, **characterized in that** the cover (116) consists of a flap connected to the heating and/or air-conditioning duct (111) by a hinge (114) positioned at a closed end (112) of the duct (111).

11. Assembly according to Claim 1, **characterized in that** it comprises two lateral acoustic volumes (121, 122) each having several holes (123) in order to furnish the assembly with a specific frequency suitable for reducing superfluous noise.

## Patentansprüche

1. Einheit, die eine Heizungs- oder Klimaanlagenleitung aufweist, die in die Fahrgastzelle montiert werden kann, um auf den Füßen der Passagiere eines Fahrzeugs zu münden, und ein Schalldämmungselement, bestehend aus:
- mindestens einer Heizungs- und/oder Klimaanlagenleitung (11 bis 121), die Ausgangslöcher (29, 99) aufweist und
- eine schalldämmende Schaumstoffplatte (16 bis 116),
wobei die Heizungs- und/oder Klimaanlagenleitung und die schalldämmende Schaumstoffplatte derart kombiniert sind, dass sie eine einzige kompakte Einheit bilden, die vor ihrem Anbringen auf dem Fahrzeug gebaut und montiert wird, **dadurch gekennzeichnet, dass** die Heizungs- und/oder Klimaanlagenleitung Befestigungspratzen (13, 93, 103, 113) und Mittel zum Befestigen der Heizungs- und/oder Klimaanlagenleitung auf der schalldämmenden Schaumstoffplatte (16 bis 116) besitzt,
und dass sie einen Deckel (16 bis 116) (26, 36, 96A, 96B, 106A, 106B und 116) aufweist, um die schalldämmende Schaumstoffplatte (25 und 35) zu umgeben, wobei der Deckel aus einem einzigen Stück mit der Heizungs- und/oder Klimaanlagenleitung (21, 31, 91, 101, 111 und 121) besteht und daher eine Klappe bildet, um die schalldämmende Schaumstoffplatte zu umgeben, und dass er in einem unteren Teil der Fahrgastzelle auf das Armaturenbrett montiert werden kann.

2. Einheit nach Anspruch 1, **dadurch gekennzeichnet, dass** die Befestigungsmittel zu der Gruppe gehören, die aus Klammern (17, 77) und Stiften des Typs mit Widerhaken (18, 28, 38, 48, 58 und 98) besteht.

3. Einheit nach Anspruch 1, **dadurch gekennzeichnet, dass** die Heizungs- und/oder Klimaanlagenleitung eine gewölbte Halbleitungsplatte (31, 41, 51, 61, 81) ist und auf die schalldämmende Schaumstoffplatte (35) mit einer Klappe aus einem Stück angelegt wird.

4. Einheit nach Anspruch 1, **dadurch gekennzeichnet, dass** die Heizungs- und/oder Klimaanlagenleitung eine gewölbte Halbleitungsplatte (41, 51, 61, 71, 81) ist und auf die schalldämmende Schaumstoffplatte (45, 55, 65, 75, 85) ohne Klappe angelegt wird.

5. Einheit nach Anspruch 1, **dadurch gekennzeichnet, dass** sie mindestens einen akustischen Hohlraum (52) aufweist, der durch eine doppelte Stärke (53) der Leitung (51) gebildet ist und aus einem Stück mit dieser letzteren ausgebildet ist.

6. Einheit nach Anspruch 3, **dadurch gekennzeichnet, dass** die Halbleitung (61) auf der schalldämmenden Schaumstoffplatte (65) bei dem Formen der Einheit anhand eines "One Shot"-Verfahrens, das heißt in einer einzigen Phase befestigt wird.

7. Einheit nach Anspruch 1, **dadurch gekennzeichnet, dass** sie mehrere Luftverteilungswege (72) aufweist, die von einer einzigen Halbleitungsplatte (71) gebildet werden und Mittel zum Befestigen (78) zwischen den Luftverteilungswegen (72) erhält.

8. Einheit nach Anspruch 3, **dadurch gekennzeichnet, dass** die Halbleitungsplatte (81) auf ihren Seiten ein Scharnier (84) in Form eines rückgefalteten U aufweist, in welches jeweils die schalldämmende Schaumstoffplatte (85) eingefügt wird.

9. Einheit nach Anspruch 1, **dadurch gekennzeichnet, dass** der Deckel aus zwei Klappen (96A, 96B, 106A, 106B) besteht, die auf jeder Seite der Leitung (91, 101) von Scharnieren (94, 104) befestigt werden und Löcher (99) oder Kerben (107A, 107B) besitzen, um die Ausgangslöcher zu bilden, wobei Befestigungsmittel in diesen zwei Teilen (96A, 96B, 106A, 106B) vorgesehen sind.

10. Einheit nach Anspruch 1, **dadurch gekennzeichnet, dass** der Deckel (116) aus einer Klappe besteht, die mit der Heizungs- und/oder Klimaanlagenleitung (111) durch ein Scharnier (114) verbunden ist, das an einem geschlossenen Ende (112) der Leitung (111) positioniert ist.

11. Einheit nach Anspruch 1, **dadurch gekennzeichnet, dass** sie zwei seitliche akustische Volumen (121, 122) aufweist, die jeweils mehrere Löcher (123) besitzen, um die Einheit mit einer Eigenfrequenz zu versehen, die zum Verringern von Störgeräuschen geeignet ist.
